# EUROPEAN PATENT APPLICATION

(11) **EP 1 376 549 A1**
(43) Date of publication of application: **02.01.2004**
(21) Application number: 03253850.6
(22) Date of filing: 18.06.2003
(51) Int. Cl.: G11B 7/00, G11B 7/09

(54) **Method of detecting imbalanced disk in disk drive apparatus and disk drive apparatus**

(30) Priority: 21.06.2002 JP 2002181724
(71) Applicant: Mitsumi Electric Co., Ltd., Tama-shi, Tokyo 206-8567 (JP)
(72) Inventor: Nagano, Kenji, Mitsumi Electric Co., LTD, Atsugi-Shi, Kanagawa 243-8533 (JP); Kageyu, Sadakazu, Mitsumi Electric Co., LTD, Atsugi-Shi, Kanagawa 243-8533 (JP)
(74) Representative: Rees, Alexander Ellison

(57) **Abstract**

A method of detecting an imbalanced disk in a disk drive apparatus (10) detects an imbalanced disk at a relatively reasonable cost with high accuracy. In a disk drive apparatus configured to read a signal recorded in a disk by using an optical pickup (11), the method includes a step of determining whether or not the disk is an imbalanced disk based on a signal component of a tracking error signal, which is detected in accordance with push-pull method, depending on a status of the optical pickup.

## Description

### BACKGROUND OF THE INVENTON

### 1. Field of the Invention

The present invention relates to a method of detecting an imbalanced disk in a disk drive apparatus and a disk drive apparatus wherein the disk drive apparatus is configured to read a signal from a rotationally driven disk by using an optical pickup.

### 2. Description of the Related Art

Disk-shaped recording media, which are hereinafter referred to as disks, such as a CD (Compact Disk) and a DVD (Digital Versatile Disk) are known as recording media for storing data and programs for personal computers. After being loaded in a disk drive apparatus, such a disk is rotationally driven at a predetermined speed and an optical pickup reads data recorded on the signal surface of the disk.

Here, if an insufficiently accurate (irregularly shaped) disk, for example, an imbalanced disk whose center of mass is not located at the center thereof, is used in an optical disk apparatus, there is a risk that vibration or noise may be caused or it may take longer time to read data from the disk. A conventional optical disk apparatus includes a vibration detecting function. When data are read from a disk, such a vibration detecting function determines whether or not the disk can cause vibration and noise. Based on determination results, the rotational speed of the disk is adjusted to suppress the noise and the vibration.

There is a risk that an imbalanced disk may be loaded in a disk drive apparatus. If such an imbalanced disk is reproduced at a high rotational speed, abnormal vibration can be caused and thereby noise can be generated from the disk drive apparatus. In order to eliminate this problem, it is necessary to determine whether or not a loaded disk is imbalanced. By using a tracking error signal detected in accordance with a three beam method, a conventional disk drive apparatus detects vibration of a disk loaded thereto. In the three beam method, two side spots are formed in the vicinity of an optical spot for reading a signal. Different detectors corresponding to the individual beams receive reflected light. The conventional disk drive apparatus obtains a tracking error signal from differential outputs between the detectors and shifts an optical pickup or a portion thereof so that the optical pickup can follow the track of the disk. According to the three beam method, for example, if the track contains undulations, a jitter due to the undulations is caught as the tracking error signal and thereby a tracking servo controls the optical pickup to follow the jitter. As a result, the conventional disk drive apparatus erroneously determines that such a disk with undulations or an eccentric disk is an imbalanced disk that can cause vibration and noise, resulting in degraded detection accuracy for vibration detection.

Alternatively, there is a conventional method for detecting an imbalanced disk by using a special element such as an acceleration sensor. However, if the disk drive apparatus uses such a special element, it is impossible to avoid the high fabrication cost of the disk drive apparatus.

### SUMMARY OF THE INVENTION

It is a general object of the present invention to provide a method of detecting an imbalanced disk in a disk drive apparatus and a disk drive apparatus in which the above-mentioned problems are eliminated.

A more specific object of the present invention is to provide a method of detecting an imbalanced disk in a disk drive apparatus and a disk drive apparatus that can detect an imbalanced disk at a relatively reasonable cost with high accuracy.

In order to achieve the above-mentioned objects, there is provided according to one aspect of the present invention a method of detecting an imbalanced disk in a disk drive apparatus wherein the disk drive apparatus is configured to read a signal recorded in a disk by using an optical pickup including an objective lens, including the step of: determining whether or not the disk is an imbalanced disk based on a signal component of a tracking error signal detected in accordance with a push-pull method, wherein the signal component depends on a status of the optical pickup.

In the above-mentioned method, the step of determining whether or not the disk is an imbalanced disk may include switching a tracking servo into OFF, comparing the signal component of the tracking error signal detected in accordance with the push-pull method to a predefined reference value, and determining whether or not the disk is an imbalanced disk based on the comparison.

In the above-mentioned method, the signal component depending on a status of the optical pickup may represent a shift amount of the objective lens vibrating in conjunction with vibration due to imbalance of the disk.

In the above-mentioned method, the signal component depending on a status of the optical pickup may be converted into one of a frequency-based signal and an amplitude-based signal.

In the above-mentioned method, the signal component depending on a status of the optical pickup may represent vibration of an objective lens of the optical pickup.

Additionally, there is provided according to another aspect of the present invention a disk drive apparatus, including: an optical pickup reading a signal recorded in a disk, the optical pickup including an objective lens; a vibration detecting part switching a tracking servo into OFF and detecting a signal component depending on a status of the optical pickup; and an imbalanced disk determining part determining whether or not the disk is an imbalanced disk based on the detected signal component.

In the above-mentioned disk drive apparatus, the signal component depending on a status of the optical pickup may be included in a tracking error signal detected in accordance with a push-pull method.

In the above-mentioned disk drive apparatus, the signal component depending on a status of the optical pickup may represent vibration of the objective lens of the optical pickup.

According to the above-mentioned inventions, a signal component of a status of an optical pickup, which varies in conjunction with vibration due to imbalance of a disk, is detected, and then it is determined whether or not the disk is imbalanced based on the detected signal component. As a result, it is possible to prevent erroneous determination whether or not the disk has large imbalance.

Other objects, features and advantages of the present invention will become more apparent from the following detailed description when read in conjunction with the accompanying drawings.

### BRIEF DESCRIPTION OF THE DRAWINGS

FIG. 1 is a flowchart of a method of detecting an imbalanced disk according to the present invention; and
FIG. 2 is a block diagram illustrating the structure of a disk drive apparatus to which the method according to the present invention is applied.

### DETAILED DESCRIPTION OF THE PREFERRED EMBODIMENTS

In the following, embodiments of the present invention will be described with reference to the accompanying drawings.

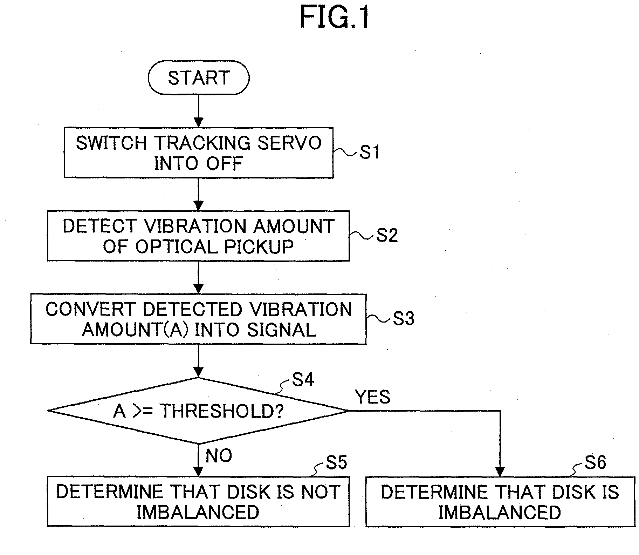

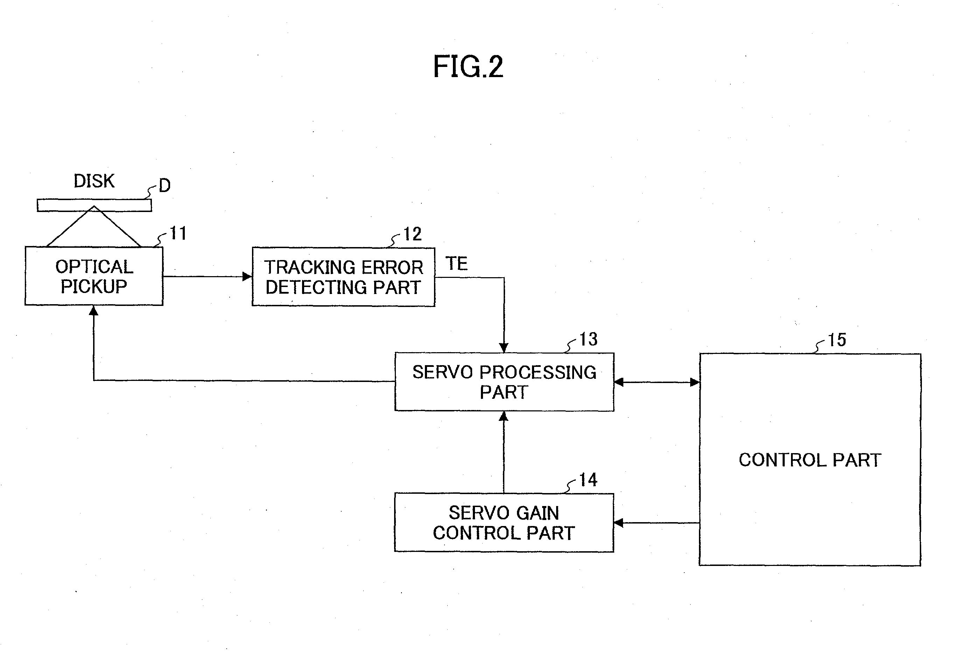

FIG. 1 is a flowchart of a method of detecting an imbalanced disk according to the present invention, and FIG. 2 is a block diagram illustrating the structure of a disk drive apparatus 10 to which the method according to the present invention is applied.

Referring to FIG. 2, the disk drive apparatus 10 comprises an optical detector (not illustrated), an optical pickup 11, a tracking error detecting part 12, a servo processing part 13, a servo gain control part 14 and a control part 15. While an optical beam is irradiated on a disk D and is reflected on the signal surface of the disk D, the optical detector is receiving the reflected optical beam. The optical pickup 11 comprises an objective lens. Based on signals received from the optical pickup 11, the tracking error detecting part 12 detects a tracking error signal in accordance with the push-pull method. The servo processing part 13 receives the tracking error signal and performs a tracking operation such that the optical beam emitted by the optical pickup 11 can properly follow the track of the disk D. The servo gain control part 14 controls a gain for the tracking process. The control part 15 controls operations of the disk drive apparatus 10.

A description will now be given, with reference to the flowchart in FIG. 1, of a method of detecting an imbalanced disk according to an embodiment of the present invention.

Referring to FIG. 1, an imbalanced disk is detected in accordance with the method as follows. When the disk D is loaded in the disk drive apparatus 10 and the control part 15 detects a trigger of starting the detection process for detecting the imbalanced disk, the control part 15 sends a signal for switching a tracking servo into OFF to the optical pickup 11 via the servo processing part 13. While the tracking servo is OFF (S1), an optical beam from the optical pickup 11 does not follow the track of the disk D. At this time, the objective lens of the optical pickup 11 vibrates variably in response with vibration due to the imbalance of the disk D. The tracking error detecting part 12 detects an amount of the vibration of the objective lens embodied in the optical pickup 11 (S2) and supplies the detection result to the servo processing part 13. The servo processing part 13 converts the vibration amount into a signal (S3) and supplies the signal representing the vibration amount to the control part 15. The control part 15 compares the vibration amount, which is referred to as A, with a predefined threshold (S4). If the vibration amount A is not greater than or equal to the threshold (S4: NO), the control part 15 determines that the disk D is not imbalanced (S5) and causes the servo gain control part 14 to reset the gain of the tracking servo so that the disk drive apparatus 10 can perform a high-speed reproduction. In contrast, if the vibration amount A is greater than or equal to the threshold (S4: YES), the control part 15 determines that the disk D is imbalanced (S6). In this case, if the disk drive apparatus 10 reproduces the disk D at a high speed, abnormal vibration is caused and thereby abnormal noise arises. In accordance with the present invention, the control part 15 causes the disk drive apparatus 10 to operate at a low speed. In this fashion, if the disk D is imbalanced, the disk drive apparatus 10 is made to perform a low-speed reproduction. When the disk drive apparatus 10 is switched into the low-speed operation mode, the servo gain control part 14 sets the gain of the tracking servo at a gain level appropriate for the low-speed reproduction.

When the servo processing part 14 converts the above-mentioned vibration amount into the signal, the vibration amount may be converted into a frequency-based signal or an amplitude-based signal. Alternatively, the vibration amount may be converted into an auxiliary signal as long as the converted signal quantitatively represents the vibration amount.

In the above-mentioned embodiment of the present invention, when the tracking servo, which serves to follow the track of a given disk, is switched into OFF at the starting time of the process for detecting an imbalanced disk, the objective lens of the optical pickup 11 realizes a status free from tracking. In this status, if the disk has undulations, the objective lens does not follow the track for a jitter due to the undulations. Then, the objective lens vibrates in conjunction with vibration due to the imbalance of the disk. In the embodiment of the present invention, the vibration of the objective lens is detected in accordance with the push-pull method, and the detected value is compared to a predefined threshold. As a result, it is possible to identify a disk of large imbalance with high accuracy without erroneous determination of an eccentric disk and a disk with undulations. Therefore, it is possible to improve detection accuracy for an imbalanced disk.

In the above-mentioned embodiment, the optical pickup vibration amount detecting function of the tracking error detecting part 12 corresponds to a vibration detecting part, and the imbalanced disk determining function of the control part 15 corresponds to an imbalanced disk determining part.

According to the present invention, while a tracking servo is OFF, an amount of vibration of an optical pickup is measured in accordance with the push-pull method. As a result, it is possible to identify a disk of large imbalance, which can cause vibration and noise, with high accuracy. Additionally, a tracking error signal detected in accordance with the push-pull method is used to detect the imbalanced disk. As a result, it is possible to fabricate the disk drive apparatus according to the present invention at a more reasonable cost than a conventional disk drive apparatus that uses an acceleration sensor to detect the imbalanced disk.

The present invention is not limited to the specifically disclosed embodiments, and variations and modifications may be made without departing from the scope of the present invention.

The present application is based on Japanese priority application No. 2002-181724 filed June 21, 2002, the entire contents of which are hereby incorporated by reference.

## Claims

1. A method of detecting an imbalanced disk in a disk drive apparatus (10) wherein said disk drive apparatus is configured to read a signal recorded in a disk by using an optical pickup (11) including an objective lens, the method **characterized by** the step of:
determining whether or not said disk is an imbalanced disk based on a signal component of a tracking error signal detected in accordance with a push-pull method,
wherein said signal component depends on a status of the optical pickup.

2. The method as claimed in claim 1, wherein said step of determining whether or not the disk is an imbalanced disk includes switching a tracking servo into OFF, comparing the signal component of the tracking error signal detected in accordance with the push-pull method to a predefined reference value, and determining whether or not the disk is an imbalanced disk based on said comparison.

3. The method as claimed in claim 2, wherein said signal component depending on a status of the optical pickup (11) represents a shift amount of the objective lens vibrating in conjunction with vibration due to imbalance of the disk.

4. The method as claimed in claim 2, wherein said signal component depending on a status of the optical pickup (11) is converted into one of a frequency-based signal and an amplitude-based signal.

5. The method as claimed in claim 1, wherein said signal component depending on a status of the optical pickup (11) represents vibration of the objective lens of the optical pickup.

6. A disk drive apparatus (10), **characterized by**:
an optical pickup (11) reading a signal recorded in a disk, said optical pickup including an objective lens;
a vibration detecting part switching a tracking servo into OFF and detecting a signal component depending on a status of the optical pickup; and
an imbalanced disk determining part determining whether or not the disk is an imbalanced disk based on the detected signal component.

7. The disk drive apparatus (10) as claimed in claim 6, wherein said signal component, which is detected by said vibration detecting part, depending on a status of the optical pickup is included in a tracking error signal detected in accordance with a push-pull method.

8. The disk drive apparatus (10) as claimed in claim 6, wherein said signal component depending on a status of the optical pickup (11) represents vibration of the objective lens of the optical pickup.
